# EUROPÄISCHE PATENTSCHRIFT

(11) **EP 0 473 921 B1**
(45) Veröffentlichungstag und Bekanntmachung des Hinweises auf die Patenterteilung: **13.10.1993**
(21) Anmeldenummer: 91112150.7
(22) Anmeldetag: 20.07.1991
(51) Int. Cl.: B23K 37/04, B23Q 1/24, B23Q 7/00

(54) **Rollenbock für die Auflagerung eines zylindrischen Werkstückes**
Turning gear for supporting cylindrical workpieces
Vireur support pour pièces cylindriques

(30) Priorität: 25.08.1990 DE 4026950; 25.08.1990 DE 4026949
(43) Veröffentlichungstag der Anmeldung: 11.03.1992
(73) Patentinhaber: Haane, Franz, D-46325 Borken (DE)
(72) Erfinder: Haane, Franz, D-46325 Borken (DE)
(74) Vertreter: Andrejewski, Walter

(56) Entgegenhaltungen:
- DE-U- 7 900 566
- FR-A- 2 083 018
- GB-A- 998 731
- PATENT ABSTRACTS OF JAPAN vol. 9, no. 215 (M-409)(1938) 3. September 1985, & JP-A-60 076299 (HITACHI SEISAKUSHO K.K.)

## Beschreibung

Die Erfindung betrifft einen Rollenbock für die Auflagerung eines zylindrischen Werkstückes, insbesondere eines Behälters und/oder eines großkalibrigen Rohrschusses, im Zusammenhang mit der Durchführung von Bearbeitungsmaßnahmen an dem Werkstück, - mit einem Kastentragwerk, seitlichen Auslegern an dem Kastentragwerk und zwei auf das Kastentragwerk aufgesetzten Auflagerrollensätzen mit zumindest zwei über eine Achse oder Welle verbundenen Auflagerrollen, von welchen Auflagerrollensätzen zumindest einer in Längsrichtung des Kastentragerwerkes verstellbar oder umsetzbar sowie in verschiedenen Positionen festsetzbar ist. Bei den Bearbeitungsmaßnahmen handelt es sich insbesondere um die Durchführung von Schweißarbeiten. Es versteht sich, daß das Kastentragwerk und zumeist auch die seitlichen Ausleger sowie die wesentlichen Bauteile der Auflagerrollensätze aus Stahlblech bestehen und daß der Rollenbock insgesamt für die aufzunehmenden Beanspruchungen ausgelegt ist. Die Bauhöhe von Rollenböcken des beschriebenen Aufbaus insgesamt und die Höhe für die Auflagerung der Werkstücke sind häufig vorgegeben und können nicht verändert werden. Die beschriebenen Rollenböcke sind entweder als stationäre Rollenböcke ausgeführt oder auch verfahrbar.

Bei dem aus DE-U-7 900 566 bekannten Rollenbock, von dem die Erfindung ausgeht, besteht das Kastentragwerk aus zwei mit Abstand voneinander angeordneten, verhältnismäßig niedrigen Kastenträgern mit quadratischem oder rechteckigem Querschnitt mit geringem Unterschied in der Länge der Rechteckseiten. Die beiden Kastenträger sind durch Traversen miteinander zu einem einheitlichen Tragwerk verbunden. Die Auflagerrollensätze sind schlittenartig zwischen den beiden Kastenträgern, an deren Kanten gelagert, geführt. Das hat sich bewährt, ist jedoch in baulicher und auch in handhabungstechnischer Hinsicht aufwendig. Die beschriebene Bauweise hält man für erforderlich, um die Flächenträgheitsmomente und die Stabilität einzurichten, die erforderlich sind, um problemlos schwere oder sehr schwere Werkstücke aufnehmen zu können. Ähnlich sind bekannte Rollenböcke aufgebaut, die nicht mit einem Kastentragwerk, sondern mit einem Tragwerk aus zwei parallel verlaufenden und über Traversen verbundenen U-Trägern arbeiten.

Die JP-A-60-076 299 (PATENT ABSTRACTS OF JAPAN, vol. 9, no. 215 vom 3. September 1985) offenbart einen Rollenbock, mit dem das zylindrische Werkstück über einen größeren Umfangsabschnitt gestützt werden kann. Zwar sind die Auflagerrollensätze reiterartig auf den Kastenträger aufgesetzt, die Bauhöhe kann bei dieser Ausführung mit Rücksicht auf das erforderliche Flächenträgheitsmoment bzw. die Stabilität jedoch nicht verringert werden.

Ähnliches gilt auch für den Stand der Technik aus der FR-A-2 083 018, bei dem das zylindrische Werkstück nicht über Auflagerrollen sondern über Schuhe abgestützt wird.

Schließlich ist die Erfindung auch nicht nahegelegt durch die GB-A-998 731, die eine Ausführung offenbart, die in der Beschreibungseinleitung erläutert ist.

Der Erfindung liegt die Aufgabe zugrunde, einen Rollenbock des eingangs beschriebenen Aufbaus und der eingangs beschriebenen Zweckbestimmung zu schaffen, welcher Problemlos für die Aufnahme von schweren und sehr schweren Werkstücken eingesetzt werden kann, jedoch in baulicher Hinsicht und auch in handhabungstechnischer Hinsicht wesentlich einfacher ist, und zwar ohne störende Veränderung der Bauhöhe. In Verbindung damit liegt der Erfindung die Aufgabe zugrunde, die Anordnung und Ausbildung so zu treffen, daß der Rollenbock wahlweise als stationärer Rollenbock oder auch als verfahrbarer Rollenbock eingesetzt werden kann.

Diese Aufgabe wird dadurch gelöst, daß die große Rechteckachse des Rechteckkastenträgers vertikal angeordnet ist, daß jeder Auflagerrollensatz zumindest zwei über eine Achse oder Welle verbundene Auflagerrollen aufweist, wobei die Achse oder Welle jedes Auflagerrollensatzes zwischen den Auflagerrollen in einem Lagerkasten gelagert ist, daß der Lagerkasten Wangen aufweist, die beidseits mit Verstellspiel oder Umsetzspiel an dem Rechteckkastenträger anliegen, daß die Auflagerrollensätze auf den Rechteckkastenträger reiterartig aufgesetzt sind und daß der Rechteckkastenträger unterhalb der Achse oder Welle der Auflagerrollen in den Bereich zwischen den Auflagerrollen hineinragt.

- Die Erfindung beruht auf der Erkenntnis, daß ein Kastentragwerk mit einem einzigen Rechteckkastenträger bei einem Rollenbock des beschriebenen Aufbaus auch bei der Aufnahme von schweren und sehr schweren Werkstücken allen Ansprüchen in bezug auf Gestaltfestigkeit, Flächenträgheitsmoment und Stabilität genügt, wenn die Auflagerrollensätze auf den Rechteckkastenträger reiterartig aufgesetzt sind und der Rechteckkastenträger unterhalb der Achse der Auflagerrollen in den Bereich zwischen den Auflagerrollen hineinragt. Auf diese Weise kann mit einem Rechteckkastenträger gearbeitet werden, bei dem die kleine Achse und die große Achse etwa im Verhältnis 1 : 2 stehen. Ohne weiteres kann die erforderliche Verstellbarkeit oder Umsetzbarkeit, bei stabilem Anschluß der Auflagerrollensätze an den Rechteckkastenträger, verwirklicht werden, wenn die Auflagerrollensätze eine Achse oder Welle aufweisen, die zwischen den Auflagerrollen in einem Lagerkasten gelagert ist, wobei der Lagerkasten Wangen aufweist, die beidseits mit Verstellspiel oder Umsetzspiel an dem Rechteckkastenträger anliegen. Nach bevorzugter Ausführungsform der Erfindung weisen in diesem Fall die Wangen der Lagerkästen und der Rechteckkastenträger einander zugeordnete Positionierungsbohrungen für die Positionierung der Auflagerrollensätze auf, wobei in die Positionierungsbohrungen Positionierungsbolzen einführbar sind. Der Rechteckkastenträger des erfindungsgemäßen Rollenbockes hat besondere Beanspruchungen im Bereich der Ausleger aufzunehmen. Damit dieses auf einfache Weise geschehen kann, ohne daß der Rechteckkastenträger insgesamt, z. B. durch größere Stahlblechdicke, für die Aufnahme dieser Beanspruchungen eingerichtet werden müßte, lehrt die Erfindung, daß der Rechteckkastenträger im Bereich der Ausleger angeschweißte Anschlußplatten aufweist, an die Fahrwerkausleger oder Abstützausleger auswechselweise angeschlossen sind. Im Rahmen der Erfindung liegt es, die Lagerkästen ihrerseits als Tragwerke auszubilden und gegebenenfalls auch als Getriebekästen für einen Auflagerrollenantrieb auszubilden. Wegen des Hineinragens des Rechteckkastenträgers in den Bereich zwischen den Auflagerrollen tritt eine störende Veränderung der Bauhöhe nicht ein. Die Bauhöhe von Rollenböcken des beschriebenen Aufbaus insgesamt und die Höhe für die Auflagerung der Werkstücke sind häufig vorgegeben und können nicht verändert werden.

Um den Rollenbock so weiter auszubilden, daß er wahlweise als stationärer Rollenbock oder auch als fahrbarer Rollenbock eingesetzt werden kann, lehrt die Erfindung, daß die Ausleger als im Vertikalschnitt U-förmig gestaltete, im wesentlichen gleiche Stahlblechkästen ausgeführt sind, die einseitig offen sowie auf der gegenüberliegenden Seite mit einer Aufstellfläche versehen sind, daß in die Stahlblechkästen jeweils zumindest ein aus dem U-förmigen Querschnitt herausragendes Laufrad eingesetzt ist, und daß die Stahlblechkästen mit einer Stirnseite an dem Kastentragwerk sowohl so festsetzbar sind, daß das Laufrad auf einer zugeordneten Laufschiene laufen kann, als auch so, daß der Ausleger mit der Aufstellfläche auf einem zugeordneten Hallenfußboden aufstehen kann. - Die Formulierung, daß mit im wesentlichen gleichen Stahlblechkästen gearbeitet wird, bringt zum Ausdruck, daß diese Stahlblechkästen in bezug auf diejenigen Ausgestaltungen und Merkmale, die für die Lehre der Erfindung wesentlich sind, gleich sind. Insoweit können die Ausleger mit ihren Stahlblechkästen an beiden Seiten des Kastentragwerkes angeordnet werden. Erfindungsgemäß kann der Rollenbock, je nach dem speziellen Einsatz, als stationärer Rollenbock aufgestellt werden, in dem die Aufstellflächen nach unten angeordnet und in dieser Anordnung festgesetzt werden, er kann aber auch als verfahrbarer Rollenbock funktionieren, in dem die Ausleger so angeordnet werden, daß die Laufräder nach unten weisen und auf zugeordneten Laufschienen laufen. Nach bevorzugter Ausführungsform der Erfindung weisen die Stahlblechkästen kastentragwerkseitig eine Stahlblechstirnseite auf. Diese kann eingeschweißt oder auch durch Abkanten gebildet sein. Andererseits empfiehlt es sich aus Stabilitätsgründen, die Anordnung so zu treffen, daß die Stahlblechkästen auch kastentragwerkabseitig eine Stahlblechstirnseite aufweisen. Entsprechend den Momenten, die bei einem erfindungsgemäßen Rollenbock die Ausleger unter Last aufzunehmen haben, kann es aus Gründen der Materialersparnis zweckmäßig sein, die Anordnung so zu treffen, daß die Stahlblechkästen in der Seitenansicht eine vom Kastentragwerk wegweisende Abschrägung aufweisen. Es versteht sich, daß bei dem erfindungsgemäßen Rollenbock die Ausleger im allgemeinen über Schraubverbindungen festsetzbar sind. Die beschriebene Einstellung läßt sich auf einfache Weise verwirklichen, wenn nach bevorzugter Ausführungsform der Erfindung die kastentragwerkseitigen Stahlblechstirnseiten um einen Drehzapfen umsetzbar sind, der mit dem Kastentragwerk und der Stahlblechstirnseite verbunden ist, und daß die Position des Laufrades in bezug auf die zugeordnete Laufschiene sowie die Position der Auflagerfläche in bezug auf den Hallenfußboden auf die Achse des Drehzapfens bezogen sind. Besonders bewährt hat sich eine Ausführungsform des erfindungsgemäßen Rollenbockes, bei dem das Kastentragwerk aus einem einzigen Rechteckkastenträger besteht, dessen lange Rechteckseite vertikal angeordnet ist.

Im folgenden wird die Erfindung anhand einer lediglich ein Ausführungsbeispiel darstellenden Zeichnung ausführlicher erläutert. Es zeigen in schematischer Darstellung
- Fig. 1: perspektivisch einen erfindungsgemäßen Rollenbock,
- Fig. 2: in gegenüber der Fig. 1 vergrößertem Maßstab einen Schnitt in Richtung A-A durch den Rollenbock der Fig. 1,
- Fig. 3: den Gegenstand nach Fig. 2 in anderer Funktionsstellung und

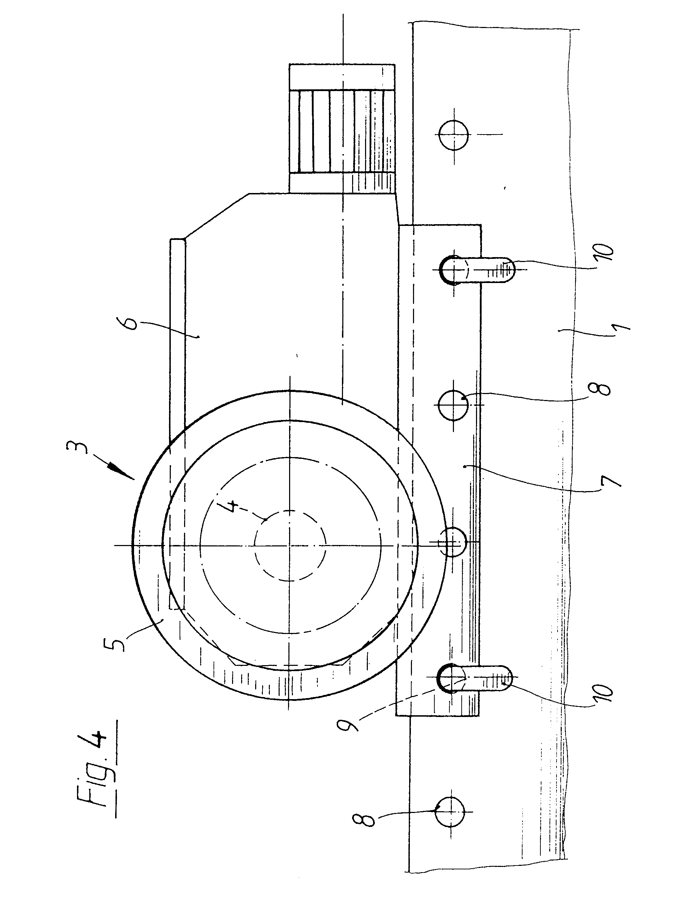

- Fig. 4: eine Seitenansicht des Gegenstandes der Fig. 2 aus Richtung des Pfeiles B.

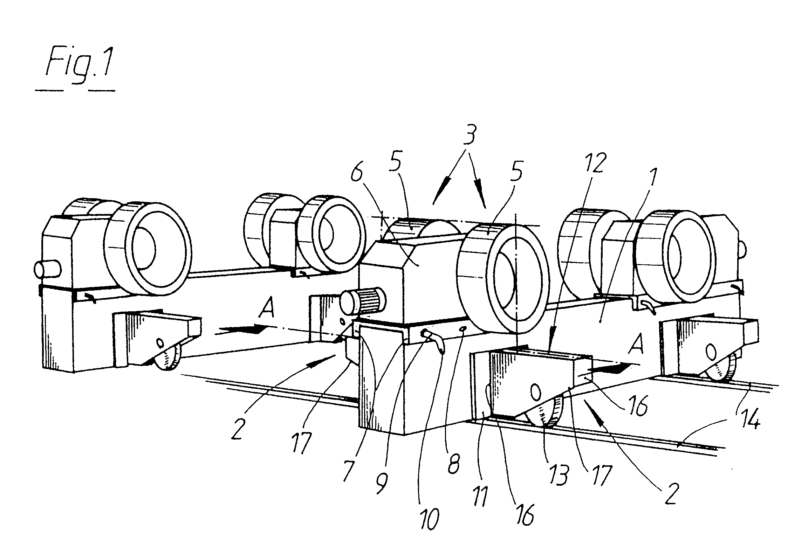

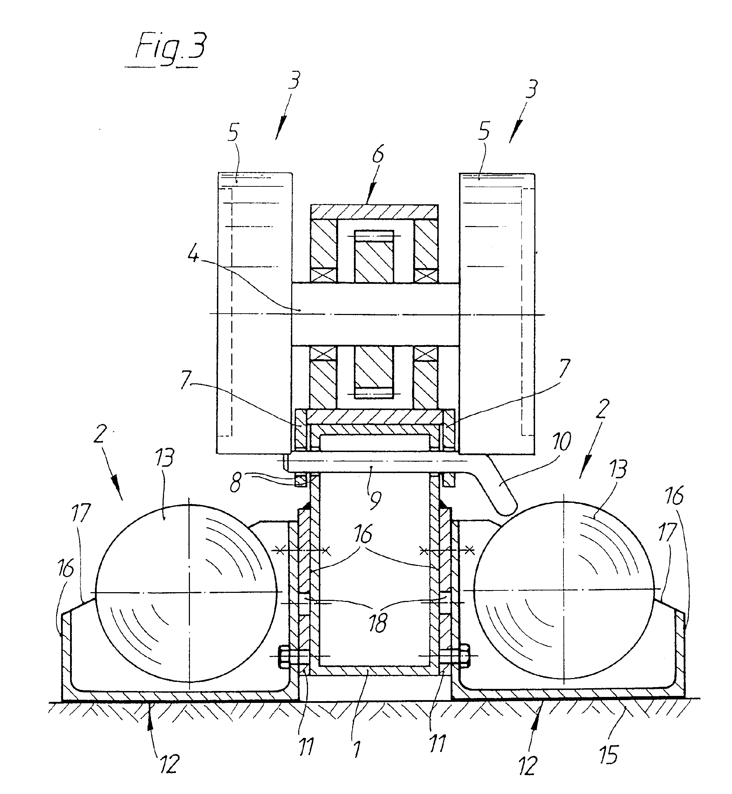

Der in den Figuren dargestellte Rollenbock ist für die Auflagerung eines zylindrischen Werkstückes, insbesondere eines Behälters und/oder eines großkalibrigen Rohrschusses oder Behälterschusses im Zusammenhang mit der Durchführung von Bearbeitungsmaßnahmen an dem Werktstück bestimmt. Insbesondere handelt es sich bei den Bearbeitungsmaßnahmen um Schweißarbeiten, die mehr oder weniger automatisch ausgeführt werden sollen. Zum Rollenbock gehören ein Kastentragwerk 1, seitliche Ausleger 2 an dem Kastentragwerk 1 und zwei auf das Kastentragwerk 1 aufgesetzte Auflagerrollensätze 3 mit zumindest zwei über eine Achse oder Welle 4 verbundenen Auflagerrollen 5. Es können an beiden Seiten der Achse oder Welle 4 auch zwei oder mehr Auflagerrollen 5 gegeneinander gesetzt sein, um die Auflagerbreite zu vergrößern. Von den Auflagerrollensätzen 3 ist zumindest einer in Längsrichtung des Kastentragwerkes 1 verstellbar oder umsetzbar sowie in verschiedenen Positionen festsetzbar, wozu auch auf die Fig. 3 verwiesen wird. Es versteht sich, daß im allgemeinen zwei Rollenböcke des beschriebenen Aufbaus zusammenarbeiten, aus welchem Grunde in der Fig. 1 ein zweiter Rollenbock im Hintergrund angedeutet wurde.

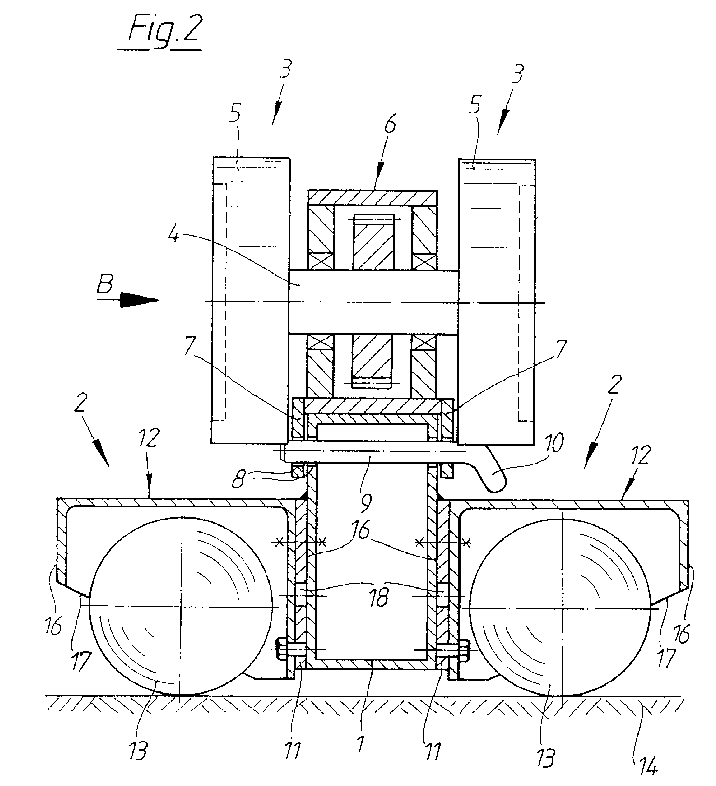

Insbesondere aus einer vergleichenden Betrachtung der Fig. 2 und 3 entnimmt man, daß das Kastentragwerk 1 im Ausführungsbeispiel aus einem einzigen Rechteckkastenträger besteht, dessen lange Rechteckachse vertikal angeordnet ist. Das Achsenverhältnis ist etwa 1 : 2. Die Auflagerrollensätze 3 sind auf den Rechteckkastenträger 1 reiterartig aufgesetzt. Der Rechteckkastenträger 1 ragt, wie insbesondere die Fig. 2 erkennen läßt, unterhalb der Achse der Auflagerrollen 5 in den Bereich zwischen den Auflagerrollen 5 hinein. Auf diese Weise kann mit einem Rechteckkastenträger 1 gearbeitet werden, der für die aufzunehmenden Beanspruchungen ein besonders günstiges Flächenträgheitsmoment aufweist, ohne daß die Gesamtbauhöhe in störendem Maße verändert wird.

Aus den Fig. 1 und 2 entnimmt man auch, daß die Auflagerrollensätze 3 eine Achse oder Welle 4 aufweisen, die zwischen den Auflagerrollen 5 in einem Lagerkasten 6 gelagert ist. Der Lagerkasten 6 besitzt Wangen 7, die beidseits mit Verstellspiel oder Umsetzspiel an dem Rechteckkastenträger 1 anliegen. Die Wangen 7 der verstellbaren oder versetzbaren Lagerkästen 6 und der Rechteckkastenträger 1 besitzen einander zugeordnete Positionierungsbohrungen 8 für die Positionierung der Auflagerrollensätze 3. In die Positionierungsbohrungen 8 sind Positionierbolzen 9 einführbar, die einen entsprechenden Betätigungshandgriff 10 aufweisen. Die Lagerkästen 6 können auch Antriebe für die Auflagerrollen 5 aufweisen.

In den Fig. 1 und 2 erkennt man, daß der Rechteckkastenträger 1 im Bereich der Ausleger 2 angeschweißte Anschlußplatten 11 besitzt, an die die Ausleger 2 auswechselbar angeschlossen sind.

In der Fig. 2 erkennt man, daß die beiden Ausleger 2 als im Vertikalschnitt U-förmig gestaltete, im wesentlichen gleiche Stahlblechkästen ausgeführt sind. Die Stahlblechkästen 2 sind einseitig offen. Sie sind an der gegenüberliegenden Seite mit einer Aufstellfläche 12 versehen. In die Stahlblechkästen 2 ist im Ausführungsbeispiel jeweils ein aus dem U-förmigen Querschnitt herausragendes Laufrad 13 eingesetzt. Man erkennt, daß die Stahlblechkästen 2 mit einer Stirnseite an dem Kastentragwerk 1 sowohl so festsetzbar sind, daß das Laufrad 13 auf einer zugeordneten Laufschiene 14 laufen kann, als auch so, daß die Aufstellfläche 12 auf einem zugeordneten Hallenfußboden aufstehen kann. Fig. 2 zeigt diejenige Ausführungsform, bei der die Laufräder 13 nach unten weisen und auf der zugeordneten Laufschiene 14 laufen können. Fig. 3 zeigt diejenige Ausführungsform, bei der die Stahlblechkästen 2 mit der Aufstellfläche 12 auf einem zugeordneten Hallenfußboden 15 aufstehen. Man erkennt, daß in beiden Funktionsstellungen die Höhe des Kastentragwerkes 1 und damit auch der Auflagerrollen 5 unverändert ist.

Im Ausführungsbeispiel und nach bevorzugter Ausführungsform der Erfindung sind die Stahlblechkästen 2 kastentragwerkseitig und kastentragwerkabseitig jeweils mit einer Stahlblechstirnseite 16 versehen. Diese kann angeschweißt oder auch durch Abkanten des Stahlbleches gebildet sein. In der Seitenansicht besitzen die Stahlblechkästen 2 eine vom Kastentragwerk wegweisende Abschrägung 17, die je nach Funktionsstellung der Ausleger 2 fallend oder steigend verläuft.

In der Fig. 2 wurde angedeutet, daß die kastentragwerkseitigen Stahlblechstirnseiten 16 um einen Drehzapfen 18 umsetzbar sind, der mit dem Kastentragwerk 1 und der Stahlblechstirnseite 16 verbunden ist. Die Position des Laufrades 13 ist in bezug auf die zugeordnete Laufschiene 14, die Position der Aufstellfläche 12 ist in bezug auf den Hallenfußboden 15 auf die Achse des Drehzapfens 18 so bezogen, daß die beschriebenen Einstellungen oder Positionierungen unschwer möglich sind..

Das Ausführungsbeispiel zeigt die bevorzugte Ausführungsform, bei der das Kastentragwerk 1 aus einem einzigen Rechteckkastenträger besteht, dessen lange Rechteckachse vertikal angeordnet ist.

## Patentansprüche

1. Rollenbock für die Auflagerung eines zylindrischen Werkstückes, insbesondere eines Behälters und/oder eines großkalibrigen Rohrschusses, im Zusammenhang mit der Durchführung von Bearbeitungsmaßnahmen an dem Werkstück, - mit einem Kastentragwerk aus einem Rechteckkastenträger (1), seitlichen Auslegern an dem Kastentragwerk und zwei auf das Kastentragwerk aufgesetzten Auflagerrollensätzen (3), von welchen Auflagerrollensätzen (3) zumindest einer in Längsrichtung des Kastentragwerkes verstellbar oder umsetzbar sowie in verschiedenen Positionen festsetzbar ist, **dadurch** **gekennzeichnet**, daß die große Rechteckachse des Rechteckkastenträgers (1) vertikal angeordnet ist, daß jeder Auflagerrollensatz (3) zumindest zwei über eine Achse oder Welle (4) verbundene Auflagerrollen (5) aufweist, wobei die Achse oder Welle (4) jedes Auflagerrollensatzes (3) zwischen den Auflagerrollen (5) in einem Lagerkasten (6) gelagert ist, daß der Lagerkasten (6) Wangen (7) aufweist, die beidseits mit Verstellspiel oder Umsetzspiel an dem Rechteckkastenträger (1) anliegen, daß die Auflagerrollensätze (3) auf den Rechteckkastenträger (1) reiterartig aufgesetzt sind und daß der Rechteckkastenträger (1) unterhalb der Achse oder Welle (4) der Auflagerrollen (5) in den Bereich zwischen den Auflagerrollen (5) hineinragt.

2. Rollenbock nach Anspruch 1, dadurch gekennzeichnet, daß die Wangen der Lagerkästen (6) und der Rechteckkastenträger (1) einander zugeordnete Positionierungsbohrungen (8) für die Positionierung der Auflagerrollensätze (3) aufweisen und daß in die Positionierungsbohrungen (8) Positionierungsbolzen (9) einführbar sind.

3. Rollenbock nach Anspruch 1 oder 2, dadurch gekennzeichnet, daß der Rechteckkastenträger (1) im Bereich der Ausleger (2) angeschweißte Anschlußplatten (11) aufweist, an die Fahrwerkausleger (2, 12) oder Abstützausleger (2) auswechselbar angeschlossen sind.

4. Rollenbock nach einem der Ansprüche 1 bis 3, dadurch gekennzeichnet, daß die Lagerkästen (6) ihrerseits als Tragwerke ausgebildet sind und gegebenenfalls auch als Getriebekasten für einen Auflagerrollenantrieb ausgebildet sind.

5. Rollenbock nach einem der Ansprüche 1 bis 4, dadurch gekennzeichnet, daß die Ausleger (2) als im Vertikalschnitt U-förmig gestaltete, im wesentlichen gleiche Stahlblechkästen ausgeführt sind, die einseitig offen sowie auf der gegenüberliegenden Seite mit einer Aufstellfläche (12) versehen sind, daß in die Stahlblechkästen (2) jeweils zumindest ein aus dem U-förmigen Querschnitt herausragendes Laufrad (13) eingesetzt ist, und daß die Stahlblechkästen (2) mit einer Stirnseite an dem Kastentragwerk (1) sowohl so festsetzbar sind, daß das Laufrad (13) auf einer zugeordneten Laufschiene (14) laufen kann, als auch so, daß der Ausleger mit der Aufstellfläche (12) auf einem zugeordneten Hallenfußboden (15) aufstehen kann.

6. Rollenbock nach Anspruch 5, dadurch gekennzeichnet, daß die Stahlblechkästen (2) kastentragwerkseitig eine Stahlblechstirnseite (16) aufweisen.

7. Rollenbock nach einem der Ansprüche 5 oder 6, dadurch gekennzeichnet, daß die Stahlblechkästen (2) kastentragwerkabseitig ebenfalls eine Stahlblechstirnseite (16) aufweisen.

8. Rollenbock nach einem der Ansprüche 5 oder 6, dadurch gekennzeichnet, daß die Stahlblechkästen (2) in der Seitenansicht eine vom Kastentragwerk wegweisende Abschrägung (17) aufweisen.

9. Rollenbock nach einem der Ansprüche 5 bis 8, dadurch gekennzeichnet, daß die kastentragwerkseitigen Stahlblechstirnseiten (16) um einen Drehzapfen (18) umsetzbar sind, der mit dem Kastentragwerk (1) und der Stahlblechstirnseite (16) verbunden ist, und daß die Position des Laufrades (13) in bezug auf die zugeordnete Laufschiene (14) sowie die Position der Aufstellfläche (12) in bezug auf den zugeordneten Hallenfußboden (15) auf die Achse (16) des Drehzapfens bezogen sind.

## Claims

1. A roller block for supporting a cylindrical workpiece, particularly a vessel and/or a large bore pipe section, in connection with carrying out processing operations on the workpiece, - with a box girder supporting framework comprising a rectangular box girder (1), side brackets on the box girder supporting framework and two sets of support rollers (3) mounted on the box girder supporting framework, at least one of which sets of support rollers (3) is adjustable or shiftable in the longitudinal direction of the box girder supporting framework and can be fixed in different positions, characterised in that the major rectangular axis of the rectangular box girder supporting framework (1) is disposed vertically, that each set of support rollers (3) has at least two support rollers (5) connected via an axle or a shaft (4), wherein the axle or shaft (4) of each set of support rollers (3) is mounted between the support rollers (5) in a bearing box (6), that the bearing box (6) has cheeks (7) which are seated against both sides of the rectangular box girder supporting framework (1) with an adjustment or displacement clearance, that the sets of support rollers (3) are mounted on the rectangular box girder supporting framework (1) in the manner of sliders, and that the rectangular box girder supporting framework (1) projects underneath the axle or shaft (4) of the support rollers (5) into the region between the support rollers (5).

2. A roller block according to claim 1, characterised in that the cheeks of the bearing box (6) and the rectangular box girder supporting framework (1) have mutually associated positioning holes (8) for positioning the sets of support rollers (3), and that positioning pins (9) can be introduced into the positioning holes (8).

3. A roller block according to claim 1 or 2, characterised in that the rectangular box girder supporting framework (1) has welded-on connection plates (11) in the region of the brackets (2), to which connection plates travelling mechanism brackets (2, 12) or support brackets (2) are interchangeably attached.

4. A roller block according to any one of claims 1 to 3, characterised in that the bearing boxes (6) themselves are constructed as supporting frameworks and are optionally also designed as a transmission casing for a support roller drive.

5. A roller block according to any one of claims 1 to 4, characterised in that the brackets (2) are constructed as substantially identical steel plate boxes which are fashioned U-shaped in vertical section, which are open on one side and which are provided with a placement surface (12) on the opposite side, that at least one running wheel (13) which projects from the U-shaped cross-section is installed in each of the steel plate boxes (2), and that an end face of the steel plate boxes (2) can be fastened to the supporting framework (1) so that the running wheel (13) can run on an associated running rail (14) and that the bracket with the placement surface (12) can also stand on an associated shop floor (15).

6. A roller block according to claim 5, characterised in that the steel plate boxes (2) have a steel plate end face (16) on the side facing the box girder supporting framework.

7. A roller block according to one of claims 5 or 6, characterised in that the steel plate boxes (2) also have a steel plate end face (16) on the side remote from the box girder supporting framework.

8. A roller block according to one of claims 5 or 6, characterised in that the steel plate boxes (2) have a bevel (17) pointing away from the box girder supporting framework as viewed from the side.

9. A roller block according to any one of claims 5 to 8, characterised in that the steel plate end faces (16) facing the box girder supporting framework can be displaced about a pivot (18) which is attached to the box girder supporting framework (1) and the steel plate end face (16), and that the position of the running wheel (13) with respect to the associated running rail (14) and the position of the placement surface (12) with respect to the associated shop floor (15) are related to the axis (16) of the pivot.

## Revendications

1. Chevalet à rouleaux pour le support d'une pièce à traiter cylindrique, notamment d'un récipient et/ou d'un élément de tuyau de gros calibre, en liaison avec la mise en oeuvre d'opérations de traitement sur la pièce à traiter, - comportant une structure de support en forme de caisson constituée par un support en forme de caisson rectangulaire (1), des bras en console latéraux montés sur la structure de support en forme de caisson et deux ensembles de rouleaux de support (3), qui sont montés sur la structure de support en forme de caisson et dont l'un au moins peut être déplacé ou décalé dans la direction longitudinale de la structure de support en forme de caisson et peut être bloqué dans différentes positions, caractérisé en ce que le grand axe du rectangle du support en forme de caisson rectangulaire (1) est vertical, que chaque ensemble de rouleaux de support (3) comporte au moins deux rouleaux de support (5), qui sont raccordés par l'intermédiaire d'un axe ou d'un arbre (4), l'axe ou l'arbre (4) de chaque ensemble de rouleaux de support (3) étant supporté entre les rouleaux de support (5) dans une boîte de palier (6), que la boîte de palier (6) comporte des flasques (7), qui s'appliquent des deux côtés, avec un certain jeu de déplacement ou de décalage, contre le support en forme de caisson rectangulaire (1), que les ensembles de rouleaux de support (3) sont montés selon une disposition à cheval sur le support en forme de caisson rectangulaire (1) et que le support en forme de caisson rectangulaire (1) pénètre, au-dessous de l'axe ou de l'arbre (4) des rouleaux de support (5), dans la zone située entre ces rouleaux de support (5).

2. Chevalet à rouleaux selon la revendication 1, caractérisé en ce que les flasques des boîtes de paliers (6) et le support en forme de caisson rectangulaire (1) comportent des trous de positionnement (8), qui sont associés entre eux, pour le positionnement des ensembles de rouleaux de support (3), et que des goujons de positionnement (9) peuvent être insérés dans les trous de positionnement (8).

3. Chevalet à rouleaux selon la revendication 1 ou 2, caractérisé en ce que le support en forme de caisson rectangulaire (1) possède, au voisinage des bras en console (2), des plaques de raccordement soudées (11), auxquelles des bras en console (2,12) du mécanisme de roulement ou des bras en console d'appui (2) peuvent être raccordés d'une manière interchangeable.

4. Chevalet à rouleaux selon l'une des revendications 1 à 3, caractérisé en ce que les boîtes de paliers (6) sont agencées pour leur part sous la forme de structures de support et sont éventuellement réalisées également sous la forme de boîtes de transmission pour un dispositif d'entraînement des rouleaux de support.

5. Chevalet à rouleaux selon l'une des revendications 1 à 4, caractérisé en ce que les bras en console (2) sont réalisés sous la forme de caissons en tôle d'acier sensiblement identiques et réalisés avec une forme de U en coupe transversale et qui sont ouverts d'un côté et sont pourvus, sur le côté opposé, d'une surface d'appui (12), que respectivement au moins une roue (13), qui fait saillie hors de la section transversale en forme de U, est insérée dans les caissons en tôle d'acier (2), et que les caissons en tôle d'acier (2) peuvent être fixés à une face frontale de la structure de support en forme de caisson (1) de telle sorte que la roue (13) peut circuler sur un rail associé (14), et également que le bras en console peut s'appliquer par la surface d'appui (12), sur un sol associé (15) d'une salle.

6. Chevalet à rouleaux selon la revendication 1, caractérisé en ce que les caissons en tôle d'acier (2) possèdent, du côté de la structure de support en forme de caisson, une face frontale (16) formée d'une tôle d'acier.

7. Chevalet à rouleaux selon l'une des revendications 5 ou 6, caractérisé en ce que les caissons en tôle d'acier (2) possèdent également une face frontale (16) formée d'une tôle d'acier, sur le côté opposé à la structure de support en forme de caisson.

8. Chevalet à rouleaux selon l'une des revendications 5 ou 6, caractérisé en ce que les caissons en tôle d'acier (2) possèdent, lorsqu'on regarde selon une vue en élévation latérale, une partie biseautée (17), qui est disposée de manière à s'écarter de la structure de support en forme de caisson.

9. Chevalet à rouleaux selon l'une des revendications 5 à 8, caractérisé en ce que les surfaces frontales (16) formées d'une tôle d'acier, qui sont situées du côté de la structure de support en forme de caisson, peuvent être décalées autour d'un tourillon (18), qui est raccordé à la structure de support en forme de caisson (1) et à la face frontale (16) formée d'une tôle d'acier, et que la position de la roue (13) par rapport au rail associé (14) et la position de la surface d'appui (12) par rapport au sol associé (15) de la salle sont rapportées à l'axe (16) du tourillon.
